(19) Europäisches Patentamt
European Patent Office
Office européen des brevets

(11) **EP 0 701 126 A2**

(12) **EUROPÄISCHE PATENTANMELDUNG**

(43) Veröffentlichungstag:
13.03.1996 Patentblatt 1996/11

(51) Int. Cl.⁶: **G01N 29/26**

(21) Anmeldenummer: 95250189.8

(22) Anmeldetag: 02.08.1995

(84) Benannte Vertragsstaaten:
**BE DE DK ES FR GB IT SE**

(30) Priorität: 16.08.1994 DE 4430604

(71) Anmelder:
- **MANNESMANN Aktiengesellschaft**
  **D-40213 Düsseldorf (DE)**
- **KRAUTKRÄMER GmbH & Co.**
  **D-50354 Hürth (DE)**

(72) Erfinder:
- **Wächter, Michael**
  **D-40882 Ratingen (DE)**

- **Hannoschöck, Kurt**
  **D-47665 Sonsbeck (DE)**
- **Grohs, Dieter**
  **D-53859 Niederkassel-Mondorf (DE)**
- **Steinert, Peter**
  **D-50171 Kerpen (DE)**
- **Zydek, Wolfgang**
  **D-50389 Wesseling (DE)**

(74) Vertreter: **Presting, Hans-Joachim, Dipl.-Ing. et al**
**Meissner & Meissner**
**Patentanwaltsbüro**
**Hohenzollerndamm 89**
**D-14199 Berlin (DE)**

(54) **Prüfkopfanordnung**

(57) Die Erfindung betrifft eine Vorrichtung zur Anordnung mindestens eines Ultraschallprüfkopfes an einem Prüfling zur Ultraschallschweißnahtprüfung von Rohren, bei der jeder Prüfkopf in einer mit Abstützpunkten versehenen Halterung eingebaut und in konstantem radialen Abstand zum Prüfling auf eine Prüfspur geführt wird, wobei der Prüfkopf im Bereich der vorderen Abstützpunkte angeordnet ist, die in Umfangsrichtung des Rohres gesehen der zu prüfenden Schweißnaht am nächsten liegen. Damit bei azentrischer Einschallung der Einschallwinkel an einer ebenen Platte möglich und keine Anpassung des Einschallwinkels für unterschiedliche Rohrdurchmesser erforderlich ist, wird erfindungsgemäß vorgeschlagen, daß an der Halterung im Bereich zwischen den vorderen (2) und hinteren (3) Abstützpunkten eine mechanisch (5,6,7) mit dem Prüfkopf (8) verbundene Abtasteinrichtung (4) angeordnet ist, wobei der Prüfkopf (8) ein Einzelschwinger ist.

Fig.2a

**Beschreibung**

Die Erfindung betrifft eine Anordnung mindestens eines Ultraschallprüfkopfes an einem Prüfling zur Ultraschallschweißnahtprüfung von Rohren gemäß dem Gattungsbegriff des Hauptanspruches.

Bei der Schweißnahtprüfung beispielsweise von Großrohren auf Längsfehler ist es für manche Prüfaufgaben erforderlich, mit dem Schalleintrittspunkt möglichst dicht an die Schweißnaht zu gelangen. Zur Führung des Ultraschallprüfkopfes wird eine Halterung verwendet, die an beiden Enden in Umfangsrichtung des Rohres gesehen je zwei Abstützpunkte aufweist. Üblicherweise liegt bei den bekannten Anlagen der Schalleintrittspunkt in Rohrumfangsrichtung mittig zwischen den genannten Abstützpunkten der Führungseinrichtung. Dies hat den Vorteil, daß der einmal gewählte Einschallwinkel für alle Rohrdurchmesser gleich bleibt und der optimale Einschallwinkel zuvor an einer Vorrichtung mit ebener Auflagefläche vermessen werden kann. Bei dieser Anordnung beträgt der mögliche minimale Abstand Schweißnahtkante/Schalleintrittspunkt die Hälfte des Abstandes der Abstützpunkte der Führungseinrichtung.

Erfordert nun die Prüfaufgabe mit dem Einschallpunkt dichter an die Schweißnahtkante zu gehen, müßte man bei einer Führungsrichtung mit mittigem Einschallpunkt den Abstand der Abstützpunkte so weit vergrößern, daß der in Umfangsrichtung des Rohres gesehen vordere Abstützpunkt auf der einen Schweißnahtseite liegt, während der hintere Abstützpunkt und der Einschallpunkt auf der gegenüberliegenden Seite der Schweißnaht liegen. Nachteile dieser Anordnung sind:

a) Für verschiedene Schalleintrittspunktabstände zur Schweißnahtkante muß der Abstand der Abstützpunkte der Führungseinrichtung verändert werden; d.h. in manchen Fällen ist keine Anzeigenoptimierung durch kontinuierliche Sprungabstandsveränderung möglich.

b) Gelegentlich auftretender Nahtkantenversatz (d.h. unterschiedliche Blechhöhen auf den beiden Nahtseiten) kann zu undefinierten Einschallwinkeländerungen führen.

c) Bei der zuvor beschriebenen Anordnung ist eine Koppelkontrolle mit Hilfe der Durchschallung nicht möglich.

Die zuvor beschriebenen Nachteile können dadurch behoben werden, daß man den Schalleintrittspunkt von der Mitte der Führungseinrichtung zum vorderen Abstützpunkt verlagert. Dies bezeichnet man auch als azentrische Einschallung. Mit dieser Anordnung kann man zwar direkt neben der Schweißnahtkante einschallen und ist bei der Anzeigenoptimierung nicht behindert. Für unterschiedliche Rohrdurchmesser muß man allerdings immer wieder den Einschallwinkel anpassen.

Außerdem kann der Einschallwinkel an der Meßvorrichtung mit ebener Auflagefläche nicht mehr kontrolliert werden.

In der FR 1595826 ist eine Einstellvorrichtung für Ultraschallprüfköpfe zur Prüfung von Schweißnähten bekannt, welche eine Einstellung und Nachführung der Einschallwinkel in Abhängigkeit von der Rohrkrümmung gestatten. Durch eine symmetrische Anlenkung der Prüfköpfe in Verbindung mit einem die Prüflingsoberfläche abtastenden Schwenkhebel wird sichergestellt, daß die Einschallung immer genau radial erfolgt.

Die US 4,112,775 zeigt die Anordnung zweier im Abstand zueinander in einem Prüfblock angeordneter Prüfköpfe, deren Einschallwinkel mittels einer Schraube einstellbar ist, wobei der eine Prüfkopf als Sender und der andere als Empfänger ausgebildet ist. Zusätzlich ist der Abstand der beiden Prüfköpfe zueinander kontinuierlich veränderbar.

In der EP 0 346 473 A1 ist eine Einrichtung zur zerstörungsfreien Prüfung von Erzeugnissen offenbart, insbesondere zur Prüfung von Schweißnähten. Bei dieser Einrichtung sind die Ultraschallwandler am Triebwerk der Abtasteinrichtung befestigt. Mittels einer Andrückvorrichtung werden sie auf die Prüflingsoberfläche gedrückt. Die Aufhängevorrichtung für die Aufhängung der Ultraschallwandler enthält biegsame Elemente, die längs der Bewegung des Triebwerkes angeordnet sind und die darauf befestigten Ultraschallwandler tragen. Die feste Verbindung der Ultraschallwandler mit dem biegsamen Element ermöglicht die Überwindung von Hindernissen auf der Prüflingsoberfläche z. B. Metallspritzer vom Schweißen unabhängig von der Krümmung der Prüflingsoberfläche.

Aufgabe der Erfindung ist es, eine gattungsmäßige Vorrichtung zur Anordnung mindestens eines Ultraschallprüfkopfes an einem Prüfling zur Ultraschallschweißnahtprüfung von Rohren anzugeben, bei der mit azentrischer Einschallung der Einschallwinkel an einer ebenen Platte möglich und keine Anpassung des Einschallwinkels für unterschiedliche Rohrdurchmesser erforderlich ist.

Diese Aufgabe wird mit den im kennzeichnenden Teil des Anspruches 1 angegebenen Merkmalen gelöst. Vorteilhafte Weiterbildungen sind Bestandteil von Unteransprüchen.

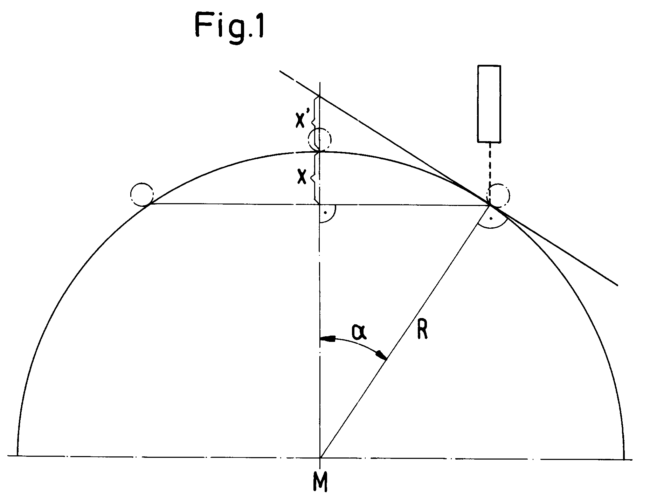

Erfindungsgemäß wird im Bereich zwischen den vorderen und hinteren Abstützpunkten eine mechanisch mit dem Prüfkopf verbundene Abtasteinrichtung angeordnet. Der zwischen den vorderen Abstützpunkten angeordnete Prüfkopf fungiert dabei als Einzelschwinger. Je nach Rohrdurchmesser wird die erfindungsgemäße Abtasteinrichtung verschieden tief eingedrückt. In der in Figur 1 dargestellten Zeichnung ergibt sich aus den nachfolgend angegebenen Formeln, daß der Weg x, den die Abtasteinrichtung erfaßt, für große Rohrdurchmesser im Verhältnis 1 : 2 zur Winkelkorrektur übertragen werden muß. Der Weg x wird auch als Führungsgröße für die Winkelkorrektur bezeichnet.

Die in der Figur 1 verwendeten Abkürzungen haben die folgende Bedeutung:

R =      Radius des Kreisquerschnittes des zu prüfenden Rohres
M =      Mittelpunkt des Kreisquerschnittes
$\alpha$ =      Winkel zwischen den Schenkeln (M-Abtasteinrichtung und M-vorderer Abstützpunkt)
x =      Weg der Abtasteinrichtung (Führungsgröße
         für die Winkelkorrektur)
x' =     Abstand Abtasteinrichtung zur am vorderen
         Abstützpunkt anliegenden Tangente

$$R/ (R+x') = \cos \lambda = (R-x)/R \qquad (1)$$

$$R^2 = (R-x) (R+x') = R^2 + Rx' - Rx - xx' \qquad (2)$$

$$Rx = x' (R-x) \qquad (3)$$

$$x' = Rx / (R-x) \qquad (4)$$

für große R gegenüber x ist x' = x

Die Mittenabtastung ermöglicht bei einer Einschallung am vorderen Abstützpunkt eine automatische durch die Rohrkrümmung bewirkte Korrektur des Einschallwinkels.

Die Vorteile der vorgeschlagenen Anordnung sind darin zu sehen, daß bei der Impuls-Reflexionsprüfung der Einschallort in beliebigem Abstand zur Schweißnahtkante bei O beginnend kontinuierlich veränderbar gewählt werden kann. Der einmal eingestellte Einschallwinkel ist für alle Rohrdurchmesser gültig.

Bei der weiterbildend vorgeschlagenen Tandemprüfung kann ebenfalls unmittelbar neben der Schweißnaht eingeschallt werden. Der Sende- und der Empfangsprüfkopf können sehr dicht benachbart angeordnet werden. Die Prüfköpfe werden automatisch entsprechend dem Rohrdurchmesser winkelkorrigiert.

In der Zeichnung wird anhand mehrerer Ausführungsbeispiele die erfindungsgemäße Vorrichtung näher erläutert.

Es zeigen:

Fig. 2a      schematische Darstellung einer Anordnung mit einem Prüfkopf Basis-Winkeleinstellung auf ebener Fläche

Fig. 2b      wie 2a,jedoch Winkelkorrektur auf gekrümmter Fläche

Fig. 3a      wie 2a, jedoch mit 2 Prüfköpfen in einer Halterung

Fig. 3b      wie 2b, jedoch mit 2 Prüfköpfen in einer Halterung

Fig. 4      eine Draufsicht einer praktischen Ausführung der Variante gemäß Fig. 3a, 3b

Fig. 5      schematische Darstellung einer Anordnung mit 2 Prüfkopfhaltern mit kardanischer Koppelung und getrennten Korrekturkufen.

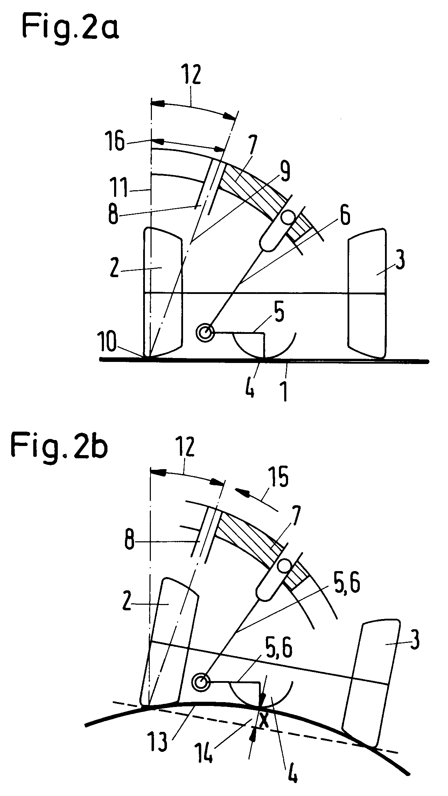

In den Figuren 2a und 2b sind in einer schematischen Darstellung eine erste Ausführungsform der erfindungsgemäßen Vorrichtung dargestellt. Die Basis-Winkeleinstellung erfolgt mittels eines Paßstückes 16 auf einer ebenen Fläche 1. Die Prüfkopfhalterung weist zwei Abstützpunkte auf, die vorzugsweise als Hartmetallräder 2,3 ausgebildet sind. Die erfindungsgemäße mechanische Abtasteinrichtung zwischen den beiden Abstützpunkten 2,3 ist als Korrekturkufe 4 ausgebildet. Diese Korrekturkufe 4 ist über ein Übersetzungsgestänge 5,6 angelängt mit einer Kulisse 7 verbunden. An der Kulisse 7 ist hier nur grob angedeutet der Prüfkopf 8 befestigt. Die Verlängerung der Schallstrahlachse 9 bis zur ebenen Fläche 1 ergibt den Einschallpunkt 10. Zwischen Lot 11 und Schallstrahlachse 9 spannt sich der Einfallwinkel $\alpha$ 12 auf. Wird nun gemäß der Darstellung Figur 2b die Prüfkopfhalterung auf eine gekrümmte Fläche 13 aufgesetzt, dann erfolgt erfindungsgemäß automatisch eine Winkelkorrektur mittels der sich bewegenden Korrekturkufe 4. Wie man gut erkennen kann, wird durch den Weg x14, die auch die Führungsgröße für die Winkelkorrektur ist, die Kufe 4 weiter eingedrückt. Über das Gestänge 5,6 erfolgt eine Verschiebung der Kulisse 7 in Pfeilrichtung 15. Der mit der Kulisse 7 verbundene Prüfkopf 8 wird dabei ebenfalls verschoben, so daß der ursprünglich auf der ebenen Fläche 1 (Figur 2a) eingestellte Einfallwinkel $\alpha$ 12 erhalten bleibt.

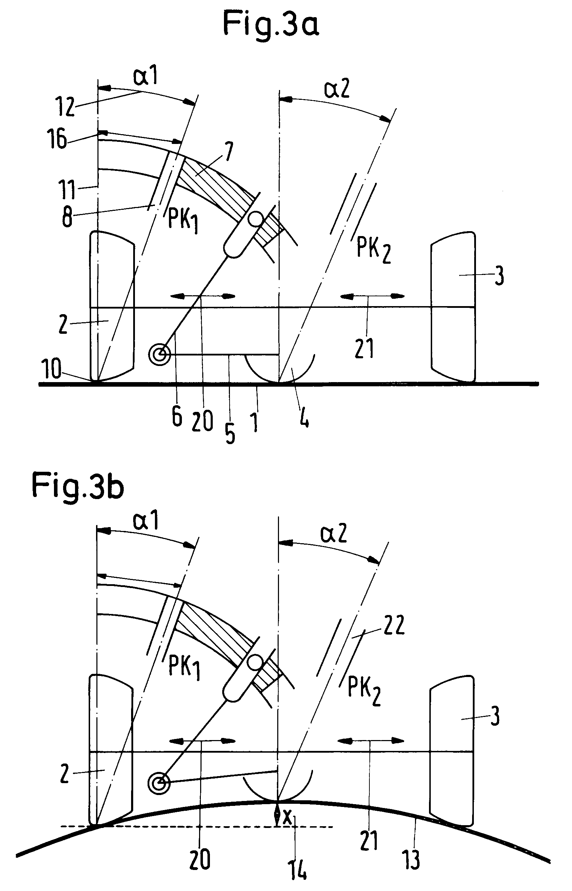

In den Figuren 3a, 3b ist in einer vergleichbaren Darstellung wie zuvor in den Figuren 2a, 2b eine weitere Ausführungsform gezeichnet, wobei für gleiche Teile gleiche Bezugszeichen verwendet worden sind. Bei dieser Ausführungsform sind zwei Prüfköpfe 8,22 in einer Halterung angeordnet. Die Prüfkonfabstandsverstellung erfolgt durch eine zur Mitte symmetrische Verschiebung der Abstützpunkte 2,3. Sie ist durch zwei Pfeile 20,21 gekennzeichnet. Der erste Prüfkopf $PK_1$8 ist wie der in Fig. 2a, 2b über die Kulisse 7 und das Gestänge 5,6 mit der Korrekturkufe 4 mechanisch verbunden. Die Winkelkorrektur nach dem Aufsetzen der Prüfkopfhalterung auf eine gekrümmte Fläche 13 erfolgt in der gleichen Weise wie zuvor beschrieben. Für den zweiten Prüfkopf $PK_2$22 ist keine Korrektur erforderlich, da die mittige Einstellung zwischen den Abstützpunkten 2,3 durch die symmetrische Verschiebung der Abstützpunkte 2,3 gewährleistet ist. Der Vorteil dieser Tandemanordnung ist darin zu sehen, daß die beiden Prüfköpfe $PK_1$8, $PK_2$22 dicht bei-einander angeordnet werden können unter Beibehaltung der erfindungsgemäßen Winkelkorrektur.

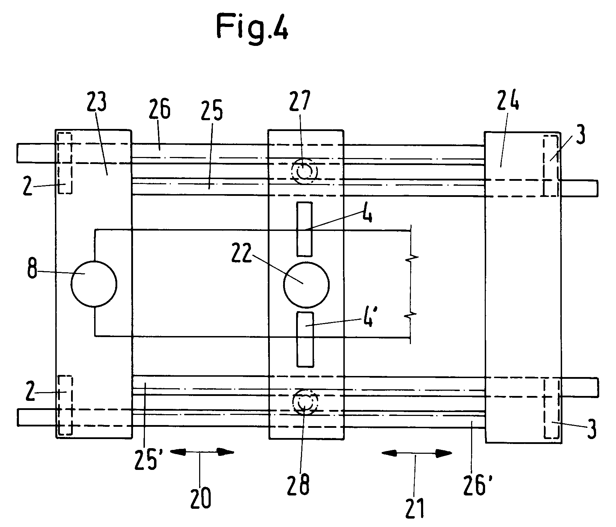

In Figur 4 ist in einer Draufsicht eine praktische Ausführung der Variante gemäß Fig. 3a, 3b dargestellt. Die Prüfkopfhalterung besteht aus zwei Halteblechen 23,24, die über zwei gegenläufige Zahnstangen 25,25';26,26' Spindeln oder ähnliches miteinander verbunden sind. Zwischen den beiden im Abstand angeordneten Zahnstangen 25,26 bzw. 25',26' befindet sich je ein Zahnrad 27,28. Die Korrekturkufen 4,4' für die Winkelkorrektur des ersten Prüfkopfes 8 sind hier nur angedeutet. Das Gestänge, sowie die Kulisse wurden hier der Einfachheit halber weggelassen. Diese Anordnung gewährleistet, daß bei Veränderungen des Abstandes zwischen den beiden Prüfköpfen 8,22 gemäß den Pfeilen 20,21 die mittige Anordnung des zweiten Prüfkopfes 22 zwischen den beiden Abstützpunkten 2,3 erhalten bleibt.

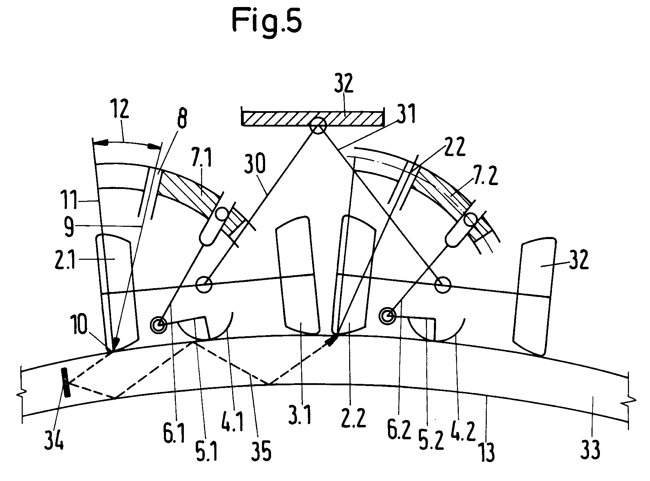

Figur 5 zeigt in einer vergleichbaren Darstellung wie Fig. 2b eine weitere Ausführungsform mit zwei getrennten Prüfkopfhalterungen mit kardanischer Koppelung und getrennten Korrekturkufen, wobei für gleiche Teile gleiche Bezugszeichen verwendet worden sind. Im Unterschied zur Darstellung in den Figuren 3a,3b sowie Fig. 4 ist der zweite Prüfkopf 22 ebenfalls an einer Kulisse 7.2 befestigt, so daß auch dieser im Winkel korrigiert werden kann. Die Verknüpfung beider Prüfkopfhalterungen erfolgt über ein kardanisches Gelenk 30,31,32. Die gekrümmte Fläche 13 wird hier durch den Teilquerschnitt eines Rohres 33 symbolisiert. Zur Veranschaulichung ist in der Wand ein übertrieben großer Fehler 34 eingezeichnet. Dieser Fehler 34 wird durch den Schallstrahl 9 des ersten Prüfkopfes 8 getroffen und in der Wand mehrfach reflektiert (gestrichelt gekennzeichnete Linie 35) und im zweiten Prüfkopf 22 empfangen.

**Patentansprüche**

1. Vorrichtung zur Anordnung mindestens eines Ultraschallprüfkopfes an einem Prüfling zur Ultraschallschweißnahtprüfung von Rohren, bei der jeder Prüfkopf in einer mit Abstützpunkten versehenen Halterung eingebaut und in konstantem radialen Abstand zum Prüfling auf einer Prüfspur geführt wird, wobei der Prüfkopf im Bereich der vorderen Abstützpunkte angeordnet ist, die in Umfangsrichtung des Rohres gesehen der zu prüfenden Schweißnaht am nächsten liegen,
   dadurch gekennzeichnet,
   daß an der Halterung im Bereich zwischen den vorderen (2) und hinteren (3) Abstützpunkten eine die Prüflingsoberfläche abtastende Abtasteinrichtung (4) angeordnet ist, die mechanisch (5,6,7) mit einem als Einzelschwinger ausgebildeten Prüfkopf (8,22) so verbunden ist, daß damit der Einschallwinkel der Prüfköpfe (8,22) veränderbar ist.

2. Vorrichtung nach Anspruch 1,
   dadurch gekennzeichnet,
   daß die Abtasteinrichtung (4) genau mittig zwischen den beiden Abstützpunkten (2,3) angeordnet ist.

3. Vorrichtung nach Anspruch 1,
   dadurch gekennzeichnet,
   daß die Halterung mehrteilig ist und Verschiebemittel (25,25',26,26',27,28) aufweist, die eine symmetrische Verschiebung (20,21) zweier im Abstand zueinander angeordneter Prüfköpfe (8,22) sicherstellt und zwar so, daß der von der Schweißnaht weiter entfernt liegende Prüfkopf (22) immer mittig zwischen den Abstützpunkten (2,3) verbleibt.

4. Vorrichtung nach Anspruch 1,
   dadurch gekennzeichnet,
   daß eine zweite Halterung vorgesehen ist, die über eine kardanische Koppelung (30,31,32) mit der ersten Halterung verbunden ist und beide Halterungen eine Abtasteinrichtung (4.1, 4.2) zur Winkelkorrektur des jeweiligen Prüfkopfes (8,22) aufweist.

5. Vorrichtung nach Anspruch 4,
   dadurch gekennzeichnet,
   daß der Prüfkopf (8) der ersten Halterung als Sender und der Prüfkopf (22) der zweiten Halterung als Empfänger oder umgekehrt ausgebildet ist.

6. Vorrichtung nach einem der vorhergehenden Ansprüche,
   dadurch gekennzeichnet,
   daß die Abstützpunkte (2,3) als Hartmetallkufen oder gehärtete Rollen ausgebildet sind.

# Fig.1

# Fig.2a

# Fig.2b

# Fig.3a

# Fig.3b

# Fig.4

# Fig.5